(19) Europäisches Patentamt
European Patent Office
Office européen des brevets

(11) **EP 1 799 473 B1**

(12) **EUROPÄISCHE PATENTSCHRIFT**

(45) Veröffentlichungstag und Bekanntmachung des Hinweises auf die Patenterteilung:
**23.09.2009 Patentblatt 2009/39**

(21) Anmeldenummer: **05783011.9**

(22) Anmeldetag: **09.09.2005**

(51) Int Cl.:
*B60G 17/019* (2006.01)    *B60G 11/27* (2006.01)
*G01S 11/12* (2006.01)    *G01H 13/00* (2006.01)
*H01P 7/06* (2006.01)

(86) Internationale Anmeldenummer:
**PCT/EP2005/009727**

(87) Internationale Veröffentlichungsnummer:
**WO 2006/027267 (16.03.2006 Gazette 2006/11)**

(54) **MIKROWELLENSENSOR ZUR HOCHGENAUEN NIVEAUMESSUNG IN EINER LUFTFEDER**

MICROWAVE SENSOR FOR HIGH-PRECISION LEVEL MEASUREMENT IN A PNEUMATIC SPRING

CAPTEUR HYPERFREQUENCES DESTINE A LA MESURE DE NIVEAU DE TRES HAUTE PRECISION DANS UN AMORTISSEUR PNEUMATIQUE

(84) Benannte Vertragsstaaten:
**DE**

(30) Priorität: **09.09.2004 DE 102004043585**
**25.02.2005 DE 102005008880**

(43) Veröffentlichungstag der Anmeldung:
**27.06.2007 Patentblatt 2007/26**

(73) Patentinhaber: **Astyx GmbH**
**85521 Ottobrunn (DE)**

(72) Erfinder: **KOERBER, Richard**
**85640 Putzbrunn (DE)**

(74) Vertreter: **Kunz, Herbert et al**
**Hammonds LLP**
**Karl-Scharnagl-Ring 7**
**80539 München (DE)**

(56) Entgegenhaltungen:
DE-A1- 2 105 359     DE-A1- 4 032 912
DE-A1- 10 025 631     DE-A1- 19 710 311

**Beschreibung**

Die vorliegende Erfindung betrifft eine Einrichtung zur Entfernungsmessung sowie ein geeignetes Verfahren bzw. Verwendung hierfür.

Herkömmlicherweise benötigen elektronische Niveauregulierungssysteme, insbesondere für Luftfederungen, sogenannte Höhensensoren, um eine Abstandsbestimmung bzw. -überwachung vornehmen zu können. Momentan werden hierfür Sensoren verwendet, welche sich außerhalb der Luftfeder befinden und separat über ein Ablenkgestänge betätigt werden. Derartige Sensoren sind allgemein den Umwelteinflüssen ausgesetzt und entsprechend anfällig. Ebenso nachteilig ist, dass bauliche Maßnahmen vorgenommen werden, die die Einsatzfähigkeiten von Luftfedern bei elektronischen Niveauregulierungssystemen erheblich einschränken. Ein bekanntes System ist beispielsweise in der DE 100 25 631 A1 beschrieben.

Die Aufgabe der vorliegenden Erfindung besteht somit darin, zum einen die bekannten Nachteile zu überwinden und zum anderen ein Niveauregulierungssystem bereitzustellen, welches eine hohe Messgenauigkeit aufweist.

Gelöst werden diese Aufgaben vorrichtungstechnisch mit den Merkmalen des Anspruchs 1, verfahrenstechnisch mit den Merkmalen des Anspruchs 8 und verwendungstechnisch mit den Merkmalen des Anspruchs 13.

Anmeldungsgemäß ist für die Luftfeder ein elektrisch leitfähiges Federelement vorgesehen, welches vorzugsweise in die Luftfeder integriert ist. Mit dieser Maßnahme wird ein Mikrowellen-Hohlraumresonator ausgebildet, so dass der Abstand bzw. die Entfernung zwischen dem metallischen Boden und Deckel der Luftfeder bestimmt werden kann. Das Messprinzip beruht auf der Bestimmung der Resonanzfrequenz eines zylindrischen Hohlraumresonators. Mit dieser Maßnahme, insbesondere dem elektrisch leitfähigen Federelement, sind die baulichen Eingriffe für ein elektronisches Niveauregulierungssystem minimiert.

Verwendungstechnisch kann somit ein funktionsfremdes Federelement für ein elektronisches Niveauregulierungssystem herangezogen werden, um über ein hochgenaues und positionsgenaues Messprinzip eine verlässliche Entfernungsbestimmung vornehmen zu können.

Wird das Federelement als Spiralfeder ausgebildet, welche bei geeigneter Drahtstärke und Steigung einen nahezu idealen Hohlraumresonator bildet. Es sei angemerkt, dass die Spiralfeder ansonsten federkraftlos für die Luftfeder vorgesehen ist, bzw. in die Luftfeder eingebracht wird. Aufgrund der geometrischen Gegebenheiten einer Spiralfeder wird somit ein zylindrischer Hohlraumresonator gebildet, in dem sich entsprechend des gewählten Frequenzbereiches eine Vielzahl von Wellenfeldern sogenannten Moden ausbilden.

Weitere vorteilhafte Ausgestaltungen sind Gegenstand der weiteren Unteransprüche.

Vorteilhafter Weise regt die Einkopplung in den Hohlraumresonator den H011-Mode an. Aufgrund der Feldverteilung wird somit der Mode mit der höchsten Güte angeregt und es wird die höchste Messgenauigkeit erzielt. Ferner weist dieser Mode ausschließlich Kreisströme auf, so dass an den umlaufenden Kanten des durch den Hohlraumresonator hervorgerufenen zylinderförmigen Gebildes, d.h. Zylinders, diese Wandströme gleich Null sind. Dies bedeutet, dass beispielsweise bei Verwendung einer Spiralfeder kein guter elektrischer Kontakt zu dem Zylinderdeckel bzw. -boden benötigt wird, wodurch die Aufbautechnik vereinfacht wird. Ferner wird der ansonsten gleichzeitig auftretende E111-Mode unterdrückt, dessen Wandströme über die Zylinderkante verlaufen.

Mit Hilfe eines direkten digitalen Synthesizers und einer Phasenregelschleife wird die Frequenz eines für die Resonanzfrequenzbestimmung notwendigen Oszillators vorteilhafterweise stabil eingestellt. Wird die Einkopplung vorteilhafter Weise über eine Drahtschleife vorgenommen, so werden die baulichen Maßnahmen gering gehalten.

Um ein optimales Messergebnis hinsichtlich der Resonanzfrequenzbestimmung zu erreichen, ist es ein Vorteil, wenn das Messsignal im Abstand R vom Mittelpunkt des Zylinderdeckels entsprechend der Formel $R = 0{,}48 \cdot x \cdot (D/2)$ vorgesehen ist, wobei D der Durchmesser des Resonators ist.

Weitere vorteilhafte Ausgestaltung der vorliegenden Erfindung sind Gegenstand der weiteren Unteransprüche.

Anhand der nachfolgenden Zeichnungen soll eine vorteilhafte Ausgestaltung der vorliegenden Erfindung wiedergegeben sein.

Fig. 1 zeigt im Querschnitt eine Luftfeder mit anmeldungsgemäßer Einrichtung.

Fig. 2 gibt ein Modendiagramm wieder anhand die vorteilhafte Modenauswahl wiedergegeben ist.

Fig. 3 zeigt die Feldverteilung des H011-Modes.

Fig. 4 zeigt eine elektromagnetische Feldsimulation der Wandströme.

Fig. 5 zeigt die Ein- und Auskopplung des elektromagnetischen Messsignals.

Fig. 6 zeigt die Feldverteilung im Bereich der Einkopplung.

Fig. 7 zeit den Frequenzgang für die Ein- und Auskopplung des Messsignals.

Fig. 8 zeigt den Zusammenhang zwischen Resonanzfrequenz als Funktion der Resonatorhöhe, das heißt zur Entfernungsbestimmung.

Fig. 9 zeigt die Anordnung zur Bestimmung der Resonanzfrequenz.

Fig. 10 zeigt die alternative Anordnung eines Senders.

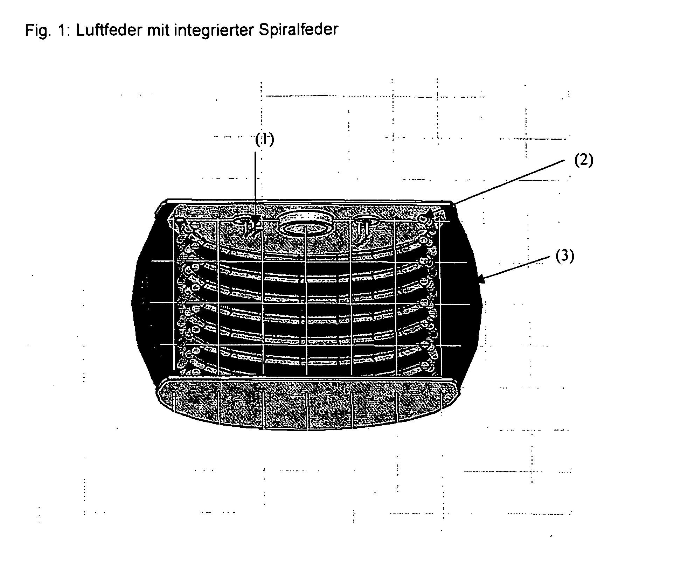

In Fig. 1 ist eine handelsübliche Luftfeder gezeigt, dessen Balg (3) keine ausreichende Leitfähigkeit besitzt, um einen Mikrowellen-Resonator mit ausreichender Güte zu bilden. Anmeldungsgemäß wird eine ansonsten federkraftlose Spiralfeder (2) vorzugsweise in die Luftfeder eingebracht, welche bei geeigneter Drahtstärke und Steigung einen nahezu idealen Hohlraumresonator bildet.

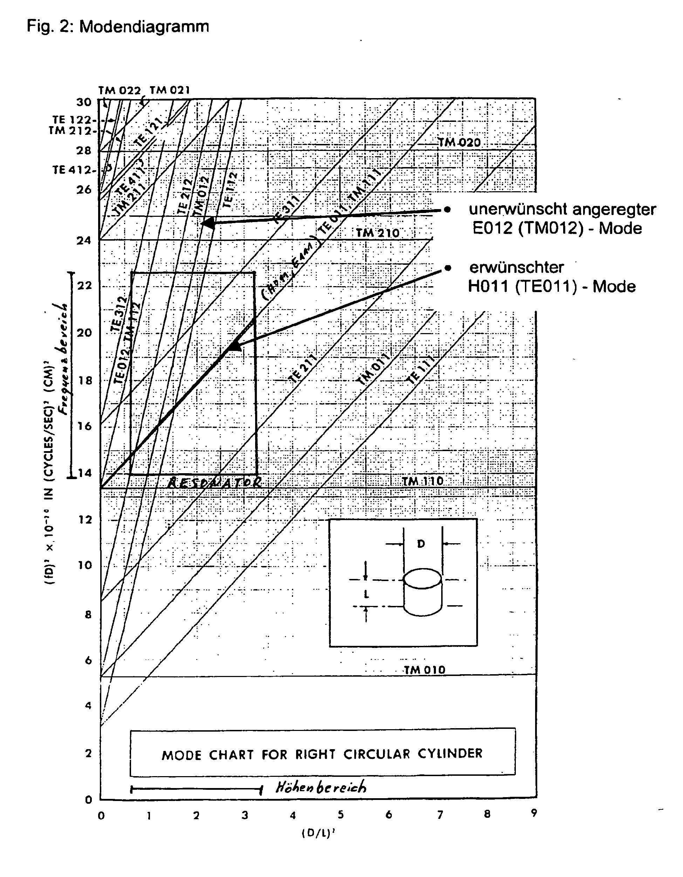

In einem zylindrischen Hohlraumresonator können sich somit entsprechend der Geometrie und des gewählten Frequenzbereichs eine Vielzahl von Wellenfeldern sog. Moden ausbilden, welche entsprechend in dem Modendiagramm gemäß Fig. 2 gezeigt dargestellt ist.

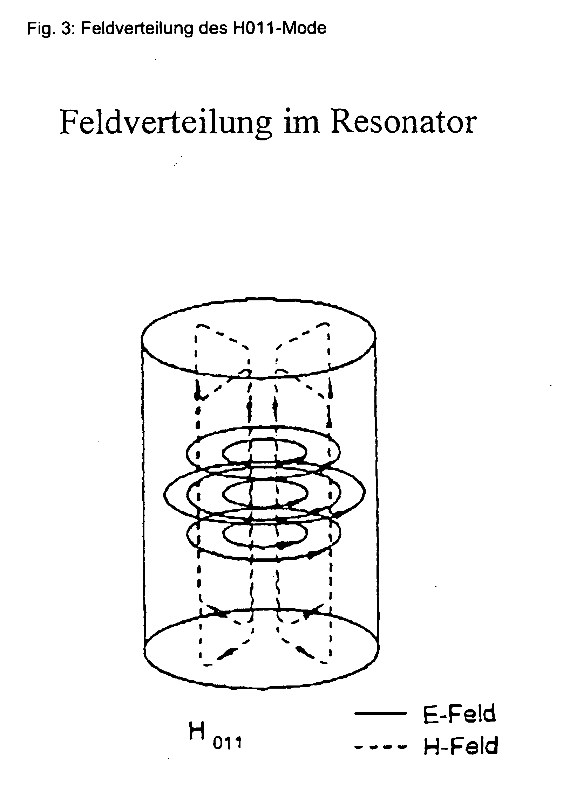

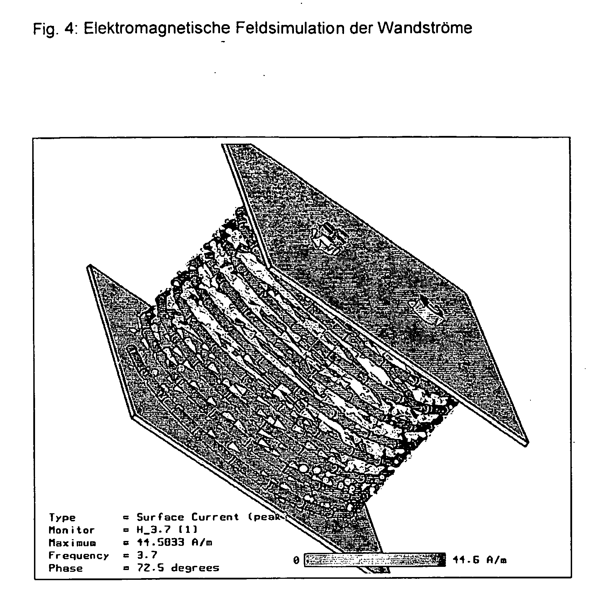

Ferner eignet sich für die Höhenmessung und damit für die Niveau-Messung in der Luftfeder sich besonders der sogenannte H011-Mode. Seine Feldverteilung ist in Fig. 3 dargestellt. Es ist der Mode mit der höchsten Güte. Mit ihm lässt sich deshalb die höchste Messgenauigkeit erzielen. Ferner weist dieser Mode ausschließlich Kreisströme auf. Diese Wandströme sind an den umlaufenden Kanten des Zylinders gleich Null. Dies bedeutet, dass die Spiralfeder keinen guten elektrischen Kontakt zu den Zylinderdeckeln benötigt, was die Aufbautechnik vereinfacht. Ferner wird der ansonsten gleichzeitig auftretende E111-Mode unterdrückt, dessen Wandströme über die Zylinderkante verlaufen. Fig. 4 zeigt eine elektromagnetische Feldsimulation der Wandströme der gewählten Anordnung.

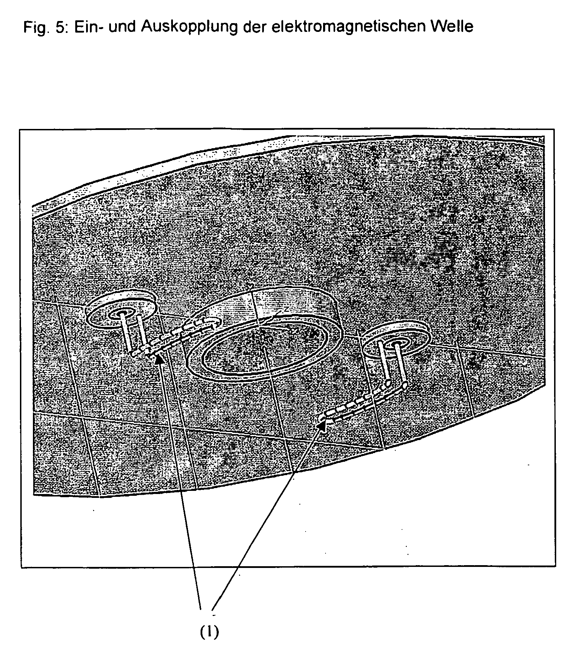

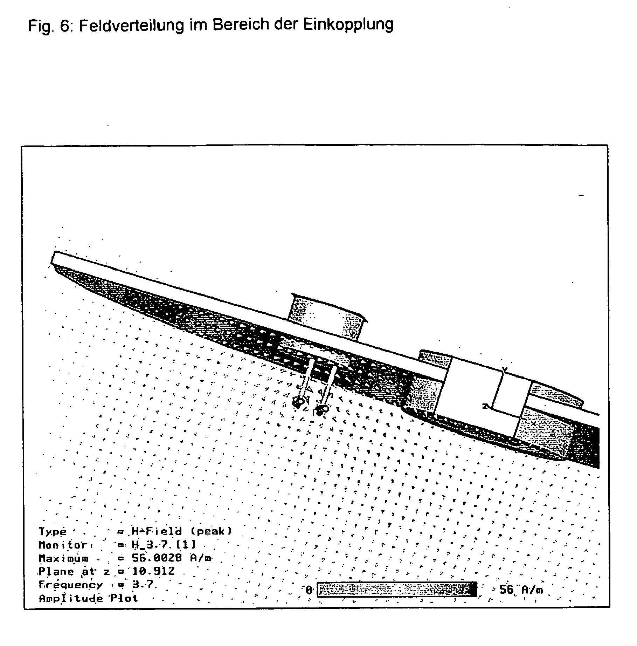

Um ein eindeutiges Messergebnis zu erzielen, sind weitere unerwünschter Moden zu unterdrücken und der H011-Mode optimal anzuregen. Dies wird durch die in Fig. 5 dargestellte Einkopplung erreicht. Sie regt entsprechend ihrer Feldverteilung (siehe Fig. 6) bevorzugt magnetische Feldlinien in radialer Richtung an. Die Einkopplung ist so anzuordnen, dass sie im Punkt der maximalen Radialkomponente des magnetischen Feldes einkoppelt. Der H011-Mode wird durch folgende Feldgleichungen beschrieben:

$$E_r = 0$$

$$E_\varphi = j\omega\mu \cdot H_0 \cdot \frac{D}{2j'_{01}} \cdot J'_0\left(\frac{2j'_{01}}{D}r\right) \cdot \sin\left(\frac{\pi}{L}z\right)$$

$$E_z = 0$$

$$H_r = H_0 \frac{\pi \cdot D}{2j'_{01}L} \cdot J'_0\left(\frac{2j'_{01}}{D}r\right) \cdot \cos\left(\frac{\pi}{L}z\right)$$

$$H_\varphi = 0$$

$$H_z = H_0 \cdot J_0\left(\frac{2j'_{01}}{D}r\right) \cdot \sin\left(\frac{\pi}{L}z\right)$$

mit

$j'_{01} = 3{,}832$   1. Nullstelle der Ableitung der Besselfunktion 0. Ordnung $J'_0$

$J_0$ bzw. $J'_0 = -J_1$   Besselfunktionen
$D$   Durchmesser des Resonators
$L$   Länge des Resonators

Wie man aus der Formel für $H_r$ sieht, ist die radiale Abhängigkeit durch den Faktor $J'_0\left(\frac{2j'_{01}}{D}r\right)$ gegeben. Das Maximum von $J'_0(x)$ wird bei $x = 1{,}841$ erreicht. Die Auflösung der Bedingung $\frac{2j'_{01}}{D}r = 1{,}841$ nach $r$ ergibt $r = 0{,}48 \cdot \frac{D}{2}$

Die Einkopplung ist also idealerweise im Abstand $r$ vom Mittelpunkt des Deckels anzubringen.

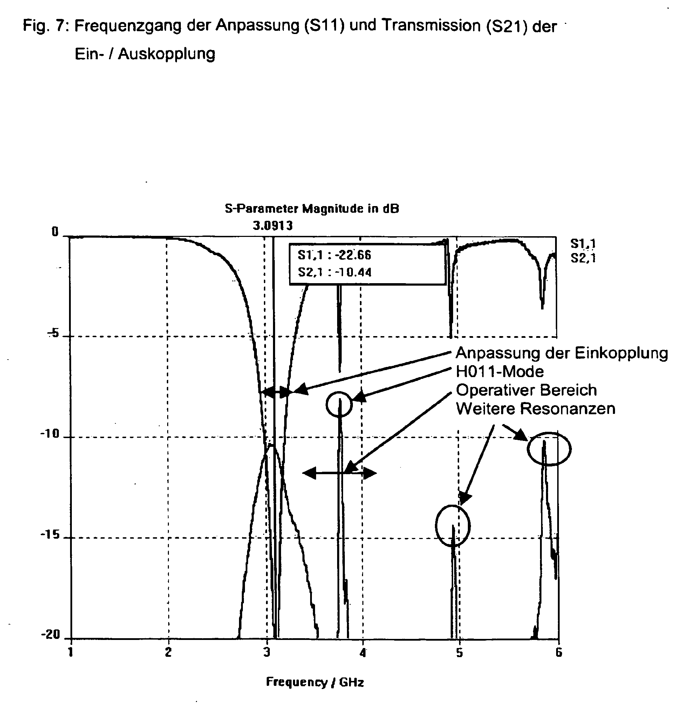

Ferner ist die Einkopplung so auszulegen, dass sie im operativen Frequenzbereich nur schwach ankoppelt, damit die Güte des Resonators nicht reduziert wird. Fig. 7 zeigt den Frequenzgang der Anpassung der Einkopplung. Der Bereich der Anpassung wird durch die Länge der Drahtschleife (1) eingestellt Bei der gewählten Spiralfeder liegt der operative Frequenzbereich bei 3,4 bis 4,3 GHz, während die Länge der Einkopplung so gewählt wurde, dass sie im Bereich um die 3 GHz angepasst ist.

Die Spiralfeder ist ferner so auszulegen, dass die Abstrahlung der elektromagnetischen Welle minimal wird und den von der Regulierungsbehörde festgelegten Grenzwert nicht überschreitet.

Die Resonanzfrequenz des H011-Modes im idealen zylindrischen Hohlraumresonators, welcher vollständig mit verlustfreiem Dielektrikum gefüllt ist, lässt sich nach folgender Formel berechnen:

$$f_R = \frac{c_0}{\lambda_R \cdot \sqrt{\varepsilon}}$$

$$\lambda_\kappa = \frac{\lambda_k}{\sqrt{1+\left(\dfrac{\lambda_k}{2\cdot L}\right)}} \qquad \lambda = 0,82\cdot D$$

mit

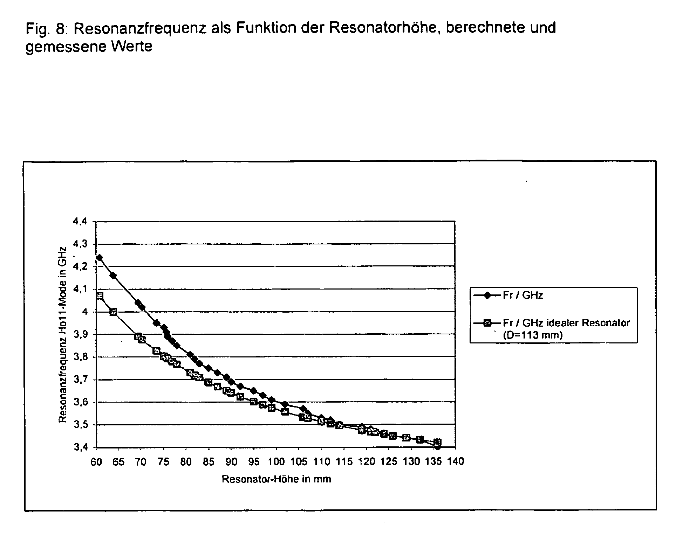

Fig. 8 zeigt den Verlauf der Resonanzfrequenz als Funktion der Resonatorhöhe für den idealen Resonator und den gemessenen Wert einer Spiralfeder mit gleichem Innendurchmesser.

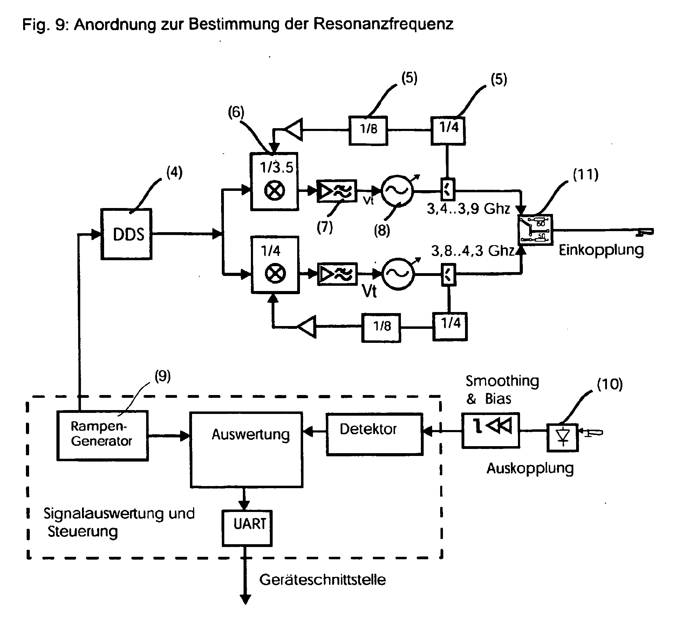

Um die Höhe des Resonators zu messen, ist also dessen Resonanzfrequenz zu bestimmen. Dies wird vorzugsweise mit der im Fig. 9 dargestellten Anordnung realisiert.

Mit Hilfe eines direkten digitalen Synthesizers (DDS) (4) und einer Phased-Locked Loop (PLL) bestehend aus Frequenzteiler (5), Phasendiskriminator (6) und Loop-Filter (7) wird die Frequenz eines Oszillators (8) stabil eingestellt. Ein Rampengenerator (9) veranlasst den DDS die Frequenz linear durchzustimmen. Sobald der Detektor (10) den Resonanzpunkt erfasst, wird die Frequenzabstimmung angehalten und der aktuelle Frequenzwert des DDS ausgelesen. Damit kann über die in Fig. 8 dargestellte Kennlinie die Höhe des Resonators und damit das Niveau der Luftfeder exakt bestimmt werden. Im gewählten Beispiel muss die Oszillatorfrequenz auf 10 MHz genau bestimmt werden, um eine Entfernungsmessgenauigkeit von 1 mm zu erreichen.

Im vorliegenden Beispiel beträgt der Hub der Luftfeder 75 mm. Dies bedeutet dass ein Frequenzbereich von 3.4 bis 4.3 GHz abgedeckt werden muss. Die technisch verfügbaren Oszillatoren weisen jedoch keine so große Abstimmbreite auf. Aus diesem Grund wird ein zweiter Oszillator für den oberen Teil des Frequenzbereichs durch einen HF-Schalter (11) dazugeschaltet.

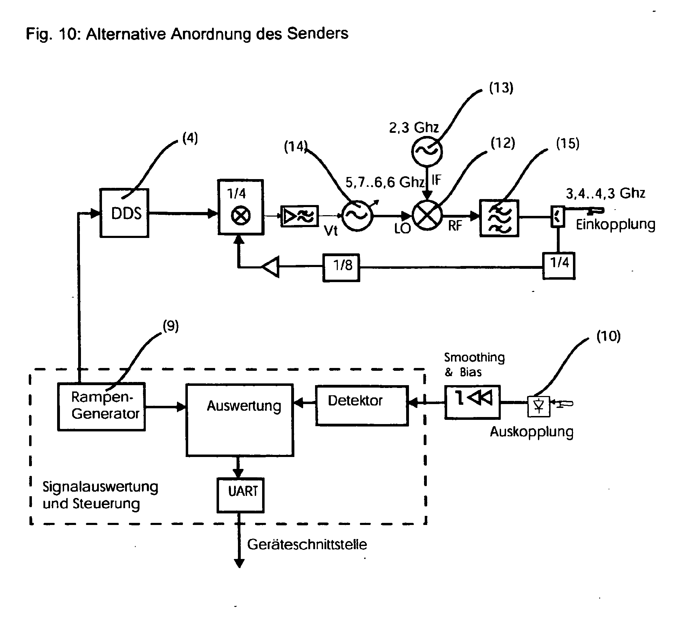

Alternativ kann der Sender auch mit der in Fig. 10 dargestellten Anordnung realisiert werden. Ein Abwärtsmischer (12) wird auf der Zwischenfrequenzseite von einem 2.3 GHz Oszillator (13) angesteuert während auf der Lokal-Oszillator-Seite ein höherfrequenter Oszillator (14) sich befindet. Da die Bandbreite der Oszillatoren proportional der Mittenfrequenz ist, kann dieser höherfrequente Oszillator die erforderliche Bandbreite von 1,1 GHz abdecken. Am RFAusgang des Mischers stellt sich dann die gewünschte Sendefrequenz ein. Der Mischer erzeugt jedoch viele weitere unerwünschte Nebenaussendungen, welche durch ein Bandpassfilter (15) unterdrückt werden.

**Patentansprüche**

1. Einrichtung zur Entfernungsmessung in einer Luftfeder mit metallischem Boden und Deckel, **dadurch gekennzeichnet, dass** ein elektrisch leitfähiges Federelement zwischen dem metallischen Deckel und Boden der Luftfeder zur Ausbildung eines Mikrowellen-Hohlraumresonators vorgesehen ist, wobei das Federelement eine Spiralfeder ist.

2. Einrichtung nach Anspruch 1, **dadurch gekennzeichnet, dass** das Federelement eine metallische Spiralfeder ist.

3. Einrichtung nach einem der Ansprüche 1 oder 2, **dadurch gekennzeichnet, dass** die Einkopplung über den H011-Mode anregt.

4. Einrichtung nach einem der Ansprüche 1 bis 3, **dadurch gekennzeichnet, dass** ein direkter digitaler Synthesizer mit Phasenregelschleife (phased-locked-loop) zur Verstimmung des Oszillators und exakten ResonanzFrequenzbestimmung vorgesehen ist.

5. Einrichtung nach einem der Ansprüche 1 bis 4, **dadurch gekennzeichnet, dass** zumindest eine Drahtschleife zur Einkopplung vorgesehen ist.

6. Einrichtung nach einem der Ansprüche 1 bis 4, **dadurch gekennzeichnet, dass** zumindest eine Drahtschleife zur Einkopplung des Messsignals und eine Drahtschleife zur Auskopplung des Messignals verwendet wird.

7. Einrichtung nach einem der Ansprüche 1 bis 6, **dadurch gekennzeichnet, dass** die Einkopplung des Messsignals im Abstand (R) vom Mittelpunkt des Deckels entsprechend:

$$R = 0,48 \,.x\, (D/2);$$

vorgesehen ist, wobei D den Durchmesser des Resonators angibt.

8. Verfahren zur Entfernungsmessung in einer Luftfeder, vorzugsweise zur Verwendung bei einer Einrichtung gemäß den Ansprüchen 1 bis 7, **dadurch gekennzeichnet, dass** ein HF-Messsignal in eine Luftfeder eingespeist wird, wobei ein elektrisch leitfähiges Federelement zwischen dem metallischen Deckel und Boden der Luftfeder zur Ausbildung eines Mikrowellen-Hohlraumresonators vorgesehen ist und als Federelement eine Spiralfeder verwendet wird.

9. Verfahren nach Anspruch 8, **dadurch gekennzeichnet, dass** als Federelement eine metallische Spiralfeder verwendet wird.

10. Verfahren nach einem der Ansprüche 8 oder 9, **dadurch gekennzeichnet, dass** der Mikrowellen-Hohlraumresonator im H011-Mode angeregt wird.

11. Verfahren nach einem der Ansprüche 8 bis 10, **dadurch gekennzeichnet, dass** sich die Einkopplung im Bereich der maximalen Feldstärke des H011-Mode befindet.

12. Verfahren nach einem der Ansprüche 8 bis 11, **dadurch gekennzeichnet, dass** die Einkopplung des Messsignals im Abstand (r) vom Mittelpunkt des Deckels entsprechend:

$$R = 0{,}48 \ .x \ (D/2);$$

vorgesehen ist, wobei D den Durchmesser des Resonators angibt.

13. Verwendung eines metallischen Federelements in einer Luftfeder zur Ausbildung eines Mikrowellenhohlraums, um den Abstand zwischen dem Deckel und Boden der Luftfeder zu bestimmen und zwar vorzugsweise anhand der Resonanzfrequenz-Eigenschaften des Mikrowellenhohlraumes, wobei als Federelement eine Spiralfeder verwendet wird.

14. Verwendung nach Anspruch 13, wobei als Federelement eine metallische Spiralfeder verwendet wird.

**Claims**

1. A device for measuring distance in a pneumatic spring with a metal base and cover, **characterised in that** an electrically conductive spring element is provided between the metal cover and base of the pneumatic spring so as to form a microwave cavity resonator, whereas the spring element is a coil spring.

2. The device according to Claim 1, **characterised in that** the spring element is a metal coil spring.

3. The device according to either of Claims 1 or 2, **characterised in that** the injection excites via the H011 mode.

4. The device according to any of Claims 1 to 3, **characterised in that** a direct digital synthesiser with a phase regulation loop (phase-locked loop) is provided for detuning the oscillator and for precisely determining resonance frequency.

5. The device according to any of Claims 1 to 4, **characterised in that** at least one wire loop is provided for injection.

6. The device according to any of Claims 1 to 4, **characterised in that** at least one wire loop is used for injecting the measurement signal, and one wire loop for extracting the measurement signal.

7. The device according to any of Claims 1 to 6, **characterised in that** the injection of the measurement signal is provided at a distance (R) away from the centre point of the cover in accordance with:

$$R = 0.48 \ .x \ (D/2);$$

D being the diameter of the resonator.

8. A method for measuring distance in a pneumatic spring, preferably for use with a device according to Claims 1 to 7, **characterised in that** an HF measurement signal is fed into a pneumatic spring, an electrically conductive spring element being provided between the metal cover and base of the pneumatic spring so as to form a microwave cavity resonator and a coil spring is used as a spring element.

9. The method according to Claim 8, **characterised in that** a metal coil spring, is used as a spring element.

10. The method according to either of Claims 8 or 9, **characterised in that** the microwave cavity resonator is excited in the H011 mode.

11. The method according to any of Claims 8 to 10, **characterised in that** the injection is located in the region of the maximum field strength of the H011 mode.

12. The method according to any of Claims 8 to 11, **characterised in that** the injection of the measurement signal is provided a distance (R) away from the centre point of the cover in accordance with:

$$R = 0.48 \ .x \ (D/2)$$

D specifying the diameter of the resonator.

13. The use of a metal spring element in a pneumatic spring for forming a microwave cavity in order to determine the distance between the cover and the base of the pneumatic spring, preferably by means of the resonance frequency properties of the microwave cavity, a coil spring being used as the spring element.

14. The application according to Claim 13, a metal coil spring being used as the spring element.

**Revendications**

1. Dispositif de mesure de la distance dans un amortisseur pneumatique comportant un couvercle et un fond métalliques, **caractérisé en ce qu'**il est prévu un élément de ressort électroconducteur entre le couvercle et le fond métalliques de l'amortisseur pneumatique de sorte à créer un résonateur à cavité à hyperfréquences, l'élément de ressort consistant en un ressort hélicoïdal.

2. Dispositif selon la revendication 1, **caractérisé en ce que** l'élément de ressort consiste en un ressort hélicoïdal métallique.

3. Dispositif selon l'une des revendications 1 ou 2, **caractérisé en ce que** l'injection excite par le mode H011.

4. Dispositif selon l'une des revendications 1 à 3, **caractérisé en ce qu'**il est prévu un synthétiseur numérique direct à boucle à verrouillage de phase (phased-locked-loop) permettant de désaccorder l'oscillateur et de déterminer la fréquence de résonance exacte.

5. Dispositif selon l'une des revendications 1 à 4, **caractérisé en ce qu'**il est prévu au moins une boucle en fil pour l'injection.

6. Dispositif selon l'une des revendications 1 à 4, **caractérisé en ce qu'**on utilise au moins une boucle en fil pour l'injection du signal de mesure et une boucle en fil pour l'extraction du signal de mesure.

7. Dispositif selon l'une des revendications 1 à 6, **caractérisé en ce que** l'injection du signal de mesure est prévue à une distance (R) du centre du couvercle conformément à :

$$R = 0{,}48 \; .x \; (D/2) \; ;$$

D représentant le diamètre du résonateur.

8. Procédé de mesure de la distance dans un amortisseur pneumatique, mis en oeuvre de préférence sur un dispositif selon les revendications 1 à 7, **caractérisé en ce qu'**il est injecté un signal de mesure haute fréquence dans un amortisseur pneumatique, en prévoyant un élément de ressort électroconducteur entre le couvercle et le fond métalliques de l'amortisseur pneumatique afin de créer un résonateur à cavité à hyperfréquences et en utilisant comme élément de ressort un ressort hélicoïdal.

9. Procédé selon la revendication 8, **caractérisé en ce que** l'élément de ressort consiste en un ressort hélicoïdal métallique.

10. Procédé selon l'une des revendications 8 ou 9, **caractérisé en ce que** le résonateur à cavité à hyperfréquences est excité au mode H011.

11. Procédé selon l'une des revendications 8 à 10, **caractérisé en ce que** l'injection se trouve dans la plage des intensités maximales de champ du mode H011.

12. Procédé selon l'une des revendications 8 à 11, **caractérisé en ce que** l'injection du signal de mesure est prévue à une distance (R) du centre du couvercle conformément à :

$$R = 0{,}48 \; .x \; (D/2) \; ;$$

D représentant le diamètre du résonateur.

13. Utilisation d'un élément de ressort métallique dans un amortisseur pneumatique afin de créer une cavité à hyperfréquence pour déterminer la distance entre le couvercle et le fond de l'amortisseur pneumatique et ce de préférence en exploitant les propriétés de fréquence de résonance de la cavité à hyperfréquences, et en utilisant comme élément de ressort un ressort hélicoïdal.

14. Utilisation selon la revendication 13, dans laquelle l'élément de ressort consiste en un ressort hélicoïdal métallique.

Fig. 1: Luftfeder mit integrierter Spiralfeder

Fig. 2: Modendiagramm

unerwünscht angeregter
E012 (TM012) - Mode

erwünschter
H011 (TE011) - Mode

MODE CHART FOR RIGHT CIRCULAR CYLINDER

Fig. 3: Feldverteilung des H011-Mode

# Feldverteilung im Resonator

$H_{011}$

——— E-Feld

- - - - H-Feld

Fig. 4: Elektromagnetische Feldsimulation der Wandströme

```
Type       = Surface Current (peak
Monitor    = H_3.7 (1)
Maximum    = 11.5833 A/m
Frequency  = 3.7
Phase      = 72.5 degrees
```

Fig. 5: Ein- und Auskopplung der elektromagnetischen Welle

(1)

Fig. 6: Feldverteilung im Bereich der Einkopplung

Fig. 7: Frequenzgang der Anpassung (S11) und Transmission (S21) der
Ein- / Auskopplung

S-Parameter Magnitude in dB

3.0913

S1,1 : -22.66
S2,1 : -10.44

S1,1
S2,1

Anpassung der Einkopplung
H011-Mode
Operativer Bereich
Weitere Resonanzen

Frequency / GHz

Fig. 8: Resonanzfrequenz als Funktion der Resonatorhöhe, berechnete und gemessene Werte

Fig. 9: Anordnung zur Bestimmung der Resonanzfrequenz

EP 1 799 473 B1

Fig. 10: Alternative Anordnung des Senders

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10025631 A1